# EUROPEAN PATENT APPLICATION

(11) **EP 2 352 125 A2**
(43) Date of publication of application: **03.08.2011**
(21) Application number: 10194793.5
(22) Date of filing: 13.12.2010
(51) Int. Cl.: G06T 7/00

(54) **Device, method and program for displaying medical images containing abnormal shadow candidates**

(30) Priority: 11.12.2009 JP 2009281100
(71) Applicant: Fujifilm Corporation, Minato-ku Tokyo (JP)
(72) Inventor: Sendai, Tomonari, Kanagawa-ken (JP); Hasegawa, Akira, San Jose, CA 95131 (US)
(74) Representative: Klunker . Schmitt-Nilson . Hirsch

(57) **Abstract**

Efficient interpretation of medical images containing abnormal shadow candidates is achieved. An image to be interpreted is divided into a plurality of regions of interest (R1 to R16) . Then, regions of interest (R6, R9, R11) containing the abnormal shadow candidates are determined based on detection information of the abnormal shadow candidates. When the regions of interest are displayed in enlarged view, the regions of interest (R6, R9, R11) containing the abnormal shadow candidates are displayed in descending order of the degree of malignancy of the abnormal shadow candidates, and then, the other regions of interest are sequentially displayed.

## Description

### BACKGROUND OF THE INVENTION

### Field of the Invention

The present invention relates to an image display device and an image display method for displaying medical images containing abnormal shadow candidates detected therefrom, as well as a program for causing a computer to carry out the image display method.

### Description of the Related Art

A computer aided diagnosis (CAD) system, which automatically detects an abnormal shadow candidate in an image and performs enhanced display, etc., of the detected abnormal shadow candidate, has been known in the medical field. A doctor interprets the image containing the abnormal shadow candidate detected by the CAD system, and finally determines whether or not the abnormal shadow candidate in the image represents a lesion, such as a tumor mass or calcification.

Examples of known techniques for detecting the abnormal shadow candidate include: a technique that involves applying image processing using an iris filter to a radiological image of the breast or chest and thresholding the output value to automatically detect a candidate a shadow of a tumor mass (a form of abnormal shadow), which is a form of cancer (see, for example, U.S. Patent No . 5, 940, 527 (hereinafter, Patent Document 1)); and a technique that involves applying image processing using a morphology filter and thresholding the output value to automatically detect a candidate of a shadow of a small calcification (a form of abnormal shadow), which is a form of breast cancer, etc. (see, for example, Japanese Unexamined Patent Publication No. 8 (1996)-294479 (hereinafter, Patent Document 2)).

To interpret simple chest images, it is necessary to differentiate an abnormal shadow contained in an image without missing a thin abnormal shadow. For this purpose, in order to efficiently interpret images, a technique which involves calculating a representative feature quantity of each image when the images are successively displayed, determining a priority order based on the representative feature quantities, and determining a display order of the images based on the priority order has been proposed (see Japanese Unexamined Patent Publication No. 5(1993)-205018 (hereinafter, Patent Document 3)). Further, a technique which involves displaying a radiological image of the entire breast (entire image), for example, and displaying an enlarged image of a region of interest (ROI) containing an abnormal shadow candidate at an area on a monitor that is different from an area on the monitor where the entire image is displayed (see Japanese Unexamined Patent Publication Nos. 2002-028154 and 2002-330949 (hereinafter, Patent Documents 4 and 5, respectively)) has been proposed. Still further, a technique which involves, when slice images are sequentially displayed at a high speed in a manner called "cine display", displaying only the slice images containing an abnormal shadow at a lower speed, or performing the cine display of the slice images containing the abnormal shadow within a predetermined slice interval in a reciprocating manner, or coloring the abnormal shadow candidate has been proposed (see Japanese Unexamined Patent Publication No. 2006-149524 (hereinafter, Patent Document 6)). Yet further, a technique which involves detecting an area containing the breast in a radiological image, dividing the area into regions of interest having a predetermined size, and sequentially displaying an enlarged image of each region of interest has been proposed.

With any of the above-mentioned display methods, however, it is very difficult to find a small abnormal shadow, such as a small calcification, from an image displayed on a monitor without missing any abnormal shadow, and it requires a long time to interpret the images. Further, although it is rare to miss an abnormal shadow immediately after the start of interpretation because the user is highly attentive, it will become more likely to miss an abnormal shadow in a repetition of the same work because of decreased attentiveness.

### SUMMARY OF THE INVENTION

In view of the above-described circumstances, the present invention is directed to enabling efficient interpretation of medical images containing abnormal shadow candidates.

An aspect of the image display device according to the invention includes: acquiring means for acquiring a medical image of a subject and detection information including positions of abnormal shadow candidates and degrees of malignancy of abnormal shadows detected from the medical image; and
display control means for dividing the medical image into a plurality of regions of interest, and sequentially displaying images of the regions of interest on display means with displaying images of the regions of interest containing the abnormal shadow candidates in descending order of the degree of malignancy based on the detection information prior to images of the regions of interest containing no abnormal shadow candidate.

It should be noted that images of the regions of interest which contain no abnormal shadow candidate may be displayed in a predetermined order. Alternatively, images of the regions of interest which contain no abnormal shadow candidate may not be displayed. In this case, a message to notify that the regions of interest which contain no abnormal shadow candidate are not displayed may be displayed.

In the image display device according to the invention, the display control means may divide the medical image into the regions of interest having a predetermined size.

In this case, the display control means may determine the predetermined size in such a manner that each abnormal shadow candidate is contained in a single region of interest.

In the image display device according to the invention, the display control means may further divide each region of interest containing the abnormal shadow candidate to separate a sub-region of interest only containing the abnormal shadow candidate therefrom, first displays images of the sub-regions of interest on the display means in descending order of the degree of malignancy of the abnormal shadow candidates contained in the sub-regions of interest, and then displays the images of the regions of interest on the display means in a predetermined order.

In this case, the display control means may display each region of interest containing the sub-region of interest with changing a manner of display of the sub-region of interest in the region of interest from a manner of display of areas other than the sub-region of interest in the region of interest.

Changing the manner of display refers to making it visually recognizable that the sub-region of interest and the areas other than the sub-region of interest in the region of interest are clearly different from each other. The manner of display of the sub-region of interest may be changed by displaying only the sub-region of interest in black or in white, by decreasing the lightness or contrast of the sub-region of interest, or by coloring the sub-region of interest, for example.

In the image display device according to the invention, when the image of each sub-region of interest and the medical image are simultaneously displayed, the display control means may provide the medical image with information for identifying a position of the sub-region of interest in the medical image.

In the image display device according to the invention, the display control means may display the image of each sub-region of interest with enlarging the sub-region of interest by an enlargement factor depending on a size of the abnormal shadow candidate contained in the sub-region of interest.

In the image display device according to the invention, the display control means may divide the medical image into a plurality of regions of interest depending on a size of each abnormal shadow candidate, each region of interest containing each one abnormal shadow candidate.

In the image display device according to the invention, when the image of each region of interest and the medical image are simultaneously displayed, the display control means may provide the medical image with information for identifying a position of the region of interest in the medical image.

In the image display device according to the invention, the display control means may display the image of each region of interest with enlarging the region of interest by an enlargement factor depending on a size of the abnormal shadow candidate contained in the region of interest.

In the image display device according to the invention, the display control means may divide only an area containing the subject in the medical image into the regions of interest to display the regions of interest.

An aspect of the image display method according to the invention includes: acquiring a medical image of a subject and detection information including positions of abnormal shadow candidates and degrees of malignancy of abnormal shadows detected from the medical image; and
dividing the medical image into a plurality of regions of interest, and sequentially displaying images of the regions of interest on display means with displaying images of the regions of interest containing the abnormal shadow candidates in descending order of the degree of malignancy based on the detection information prior to images of the regions of interest containing no abnormal shadow candidate.

The image processing method according to the invention may be provided in the form of a program for causing a computer to carry out the image processing method or a computer-readable recording method containing the program.

According to the present invention, when the images of the regions of interest are sequentially displayed, the images of the regions of interest which contain the abnormal shadow candidates are displayed in descending order of the degree of malignancy prior to images of the regions of interest containing no abnormal shadow candidate. Thus, the image of the region of interest containing an abnormal shadow candidate which is highly likely to be an abnormal shadow is displayed first. In this manner, the user can first perform interpretation of the image of the region of interest containing the abnormal shadow candidate which is highly likely to be an abnormal shadow, and thus can pay higher attention to interpretation of the images of such regions of interest. Thus, the user who performs interpretation is less likely to miss an abnormal shadow candidate which is highly likely to be an abnormal shadow. Further, since the user does not need to pay high attention to interpretation of the images of the regions of interest containing no abnormal shadow candidate, which are displayed later, the time taken for interpretation can be reduced. Therefore, according to the invention, efficient interpretation of medical images can be achieved without imposing a burden on the user.

Further, by dividing the medical image into a plurality of regions of interest having a predetermined size, the regions of interest can be displayed to have a fixed size.

In this case, by determining the predetermined size in such a manner that each abnormal shadow candidate is contained in a single region of interest, the user is less likely to miss an abnormal shadow candidate that is highly likely to be an abnormal shadow.

Further, by dividing each region of interest containing the abnormal shadow candidate to separate a sub-region of interest only containing the abnormal shadow candidate therefrom, first displaying images of the sub-regions of interest in descending order of the degree of malignancy of the abnormal shadow candidate contained in the sub-regions of interest, and then displaying the images of the regions of interest in a predetermined order, each abnormal shadow candidate is displayed in a range narrower than the region of interest. Thus, a range which should be interpreted with higher attention can be narrowed, thereby further reducing a burden imposed on the user who interprets the images.

In this case, by displaying each region of interest containing the sub-region of interest with changing a manner of display of the sub-region of interest in the region of interest from a manner of display of areas other than the sub-region of interest in the region of interest, the user does not need to repeat interpretation of the sub-region of interest contained in the region of interest, and can perform the interpretation more efficiently.

Further, by dividing the medical image into a plurality of regions of interest, each of which contains each one abnormal shadow candidate, depending on a size of each abnormal shadow candidate, a range to be interpreted in the displayed image of the region of interest can be narrowed, and the user can perform the interpretation more efficiently.

Still further, by providing the medical image with information for identifying a position of the region of interest or the sub-region of interest in the medical image when the image of each region of interest or sub-region of interest and the medical image are simultaneously displayed, the user can recognize the position of the displayed region of interest or sub-regions of interest in the medical image, and thus can easily recognize the position of the abnormal shadow candidate in the subject contained in the medical image.

Further, by displaying the image of the region of interest or sub-region of interest with enlarging the region of interest or sub-region of interest by an enlargement factor depending on a size of the abnormal shadow candidate contained therein, the user can perform interpretation of a small abnormal shadow candidate more easily.

### BRIEF DESCRIPTION OF THE DRAWINGS

FIG. 1 is a diagram illustrating the schematic configuration of a medical information system including an image interpretation workstation, to which an image display device according to a first embodiment of the present invention is applied,
FIG. 2 is a schematic diagram illustrating the configuration of the image interpretation workstation,
FIG. 3 is a diagram illustrating a range where an abnormal shadow candidate is present,
FIG. 4 is a flow chart illustrating a process that is carried out during image display in the first embodiment,
FIG. 5 is a diagram for explaining how a breast area is detected,
FIG. 6 is a diagram for explaining division into regions of interest in the first embodiment,
FIG. 7 is a diagram illustrating an example of an interpretation screen,
FIG. 8 is a diagram for explaining a display order of images of the regions of interest in the first embodiment,
FIG. 9 is a diagram illustrating regions of interest and sub-regions of interest in the second embodiment,
FIG. 10 is a diagram for explaining a display order of images of the regions of interest and the sub-regions of interest in the second embodiment,
FIG. 11 is a diagram illustrating regions of interest and sub-regions of interest in a third embodiment,
FIG. 12 is a diagram for explaining a display order of images of the regions of interest and the sub-regions of interest in the third embodiment,
FIG. 13 is a diagram for explaining another display order of images of the regions of interest and the sub-regions of interest in the third embodiment,
FIG. 14 is a diagram illustrating a state where each abnormal shadow candidate extends across two or more regions of interest,
FIG. 15 is a diagram for explaining a display order of images of the regions of interest in the state where an abnormal shadow candidate extends across two or more regions of interest, and
FIG. 16 is a diagram illustrating another example of the interpretation screen.

### DESCRIPTION OF THE PREFERRED EMBODIMENTS

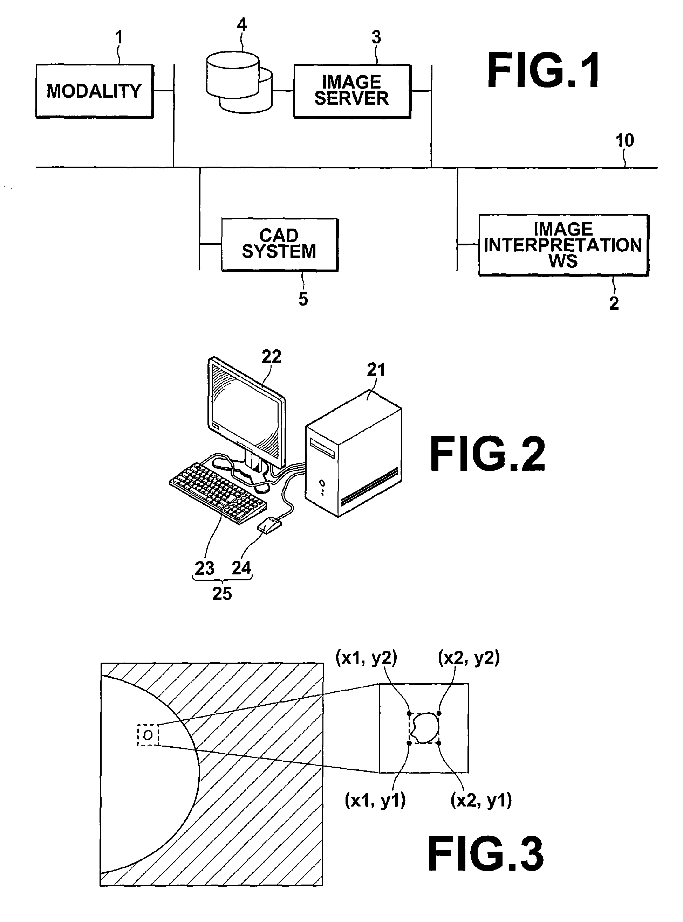

Hereinafter, embodiments of the present invention will be described with reference to the drawings. FIG. 1 is a diagram illustrating the schematic configuration of a medical information system including an image interpretation workstation, to which an image display device according to a first embodiment of the present invention is applied. As shown in FIG. 1, the medical information system according to this embodiment includes: an imaging device for obtaining a medical image (modality) 1, an image interpretation workstation (WS) 2, an image server 3, an image database 4 and a CAD system (computer aided diagnosis system) 5, which are connected via a network 10 to be able to communicate with each other. Further, the components in this embodiment are controlled by a program which is installed from a recording medium, such as a CD-ROM. Alternatively, the program may be download from a server connected via a network, such as the Internet, before it is installed.

The modality 1 include a device that images a part to be examined of a subject, generates image data of an image representing the part, adds associated information, such as examination information and patient information, to the image data, and outputs the image data. In this embodiment, a mammographic unit, which acquires image data that represents a radiological image (breast image) M0 of the breast (hereinafter, the image and the image data representing the image are denoted by the same reference symbol for simplicity), is used as the modality 1. However, the modality in the invention is not limited to the mammographic unit, and may, for example, be an ultrasonic imaging apparatus or a tomographic imaging apparatus.

The image interpretation workstation 2 is used by the user, such as an interpretation doctor or a technologist, to interpret images and generate an interpretation report. FIG. 2 is a schematic diagram illustrating the configuration of the image interpretation workstation 2. As shown in FIG. 2, the image interpretation workstation 2 includes a processing device 21, which includes a CPU, a storage device, such as a hard disk, a memory and various interfaces, one or two high-definition displays 22 (only one display is shown in the drawing), and input devices 25, such as a keyboard 23 and a mouse 24. The image interpretation workstation 2 performs various operations according to a program installed on the processing device 21, such as sending an image viewing request to the image server 3, applying various types of image processing on images received from the image server 3, displaying the images, assisting the user to generate an interpretation report, sending a registration request and a viewing request of the interpretation report to an interpretation report server (not shown), and displaying the interpretation report received from the interpretation report server. The image interpretation workstation 2 also provides instructions to detect an abnormal shadow candidate to the CAD system 5, which will be described later.

The image server 3 is formed by a general-purpose computer having a relatively high processing capacity, on which a software program that provides a function of a database management system (DBMS) is installed. The image server 3 further includes a large-capacity storage forming the image database 4. The storage may be formed by a large-capacity hard disk device, which is connected to the image server 3 via a data bus, or a disk device connected to a NAS (Network Attached Storage) and a SAN (Storage Area Network) which are connected to the network 10. The image server 3 also includes a communication interface for communication with the modality 1, the image interpretation workstation 2, the CAD system 5, etc., via the network 10.

When the image server 3 receives the image registration request to register an image fed from the modality 1, the image server 3 converts the image into a format for the database and registers the image on the image database 4. When information of result of detection of an abnormal shadow candidate (hereinafter, "detection information D") is sent from the CAD system 5, which will be described later, the image server 3 registers the detection information D on the image database 4 with associating the detection information D with the image data M0 from which the detection information D is acquired.

The image database 4 contains the image data M0 and the associated information registered thereon. The image database 4 further contains the detection information D registered thereon. The associated information may include such information as an image ID for identifying each image, a patient ID for identifying each subject, an examination ID for identifying each examination, a unique ID (UID) assigned to each image, examination date and examination time on which each image is generated, patient information, such as the name, age, sex, etc., of each patient, and an examined part (imaged part) .

When the image server 3 receives the viewing request from the image interpretation workstation 2 via the network 10, the image server 3 searches through images registered on the image database 4, and sends image data of an extracted image together with the associated information and the detection information D to the image interpretation workstation 2 which sent the request.

When the user makes an operation to request to view an image to be interpreted, the image interpretation workstation 2 sends the viewing request to the image server 3, and obtains the image data M0 of the breast image to be interpreted and the detection information D associated with the image data M0.

The CAD system 5 is formed by a general-purpose computer, on which a software program that provides a function to detect the abnormal shadow candidate is installed. The CAD system 5 also includes a communication interface for communication with the modality 1, the image interpretation workstation 2, etc., via the network 10.

According to instructions from the image interpretation workstation 2, the CAD system 5 obtains the image data M0 of the breast image M0 from the image server 3, and detects an abnormal shadow candidate (which includes a tumor mass shadow candidate and a small calcification shadow candidate) in the breast image M0 based on the obtained image data M0. Specifically, a technique using iris filtering, etc., (see Patent Document 1) or a technique using a morphology filter (see Patent Document 2) may be used to extract areas that may possibly be abnormal shadows, and whether or not each extracted area is an abnormal shadow candidate is determined using a classifier, such as a neural network, to detect the abnormal shadow candidate. Further, the CAD system 5 generates the detection information D containing a position of a range where the detected abnormal shadow candidate is present and a degree of malignancy of the abnormal shadow candidate, and sends the detection information D to the image server 3. The position of the range where the abnormal shadow candidate is present is represented by coordinates of four corners ( (x1,y1), (x1,y2), (x2,y1), (x2,y2)) of a circumscribed rectangle that surrounds the abnormal shadow candidate contained in the image M0 (see FIG. 3) . The area surrounded by the four corners ( (x1,y1), (x1,y2), (x2,y1), (x2,y2) ) is the range where the abnormal shadow candidate is present. The degree of malignancy is represented by an output value from the above-mentioned classifier, such as a neural network. The higher the output value, the higher the malignancy of the abnormal shadow candidate.

Although the CAD system 5 detects the abnormal shadow candidate in response to the instruction from the image interpretation workstation 2 in this embodiment, the CAD system 5 may automatically detect the abnormal shadow candidate when the image data M0 is inputted.

Next, a process carried out in the first embodiment is described. Since the invention is characterized by image display processing for interpretation that is carried out in the image interpretation workstation 2, the following description only describes the image display processing carried out in the image interpretation workstation 2. It is assumed here that the breast image M0 to be interpreted with the detection information D have been sent from the image database 4 to the image interpretation workstation 2.

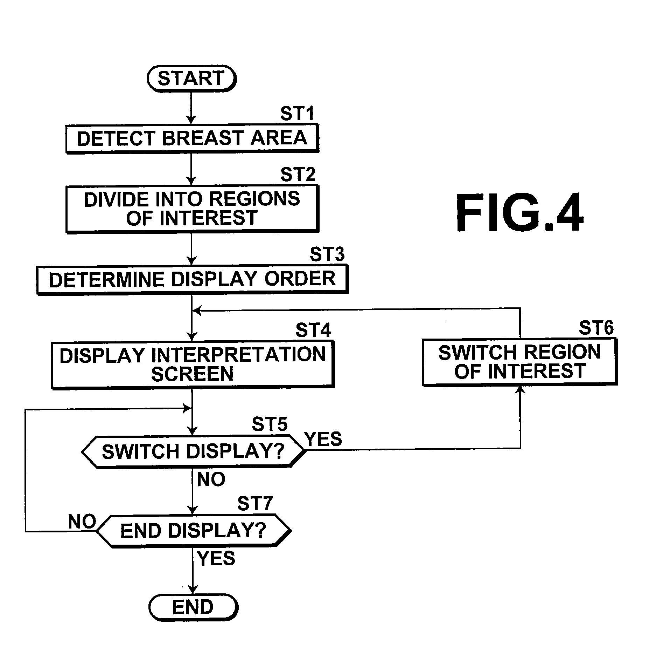

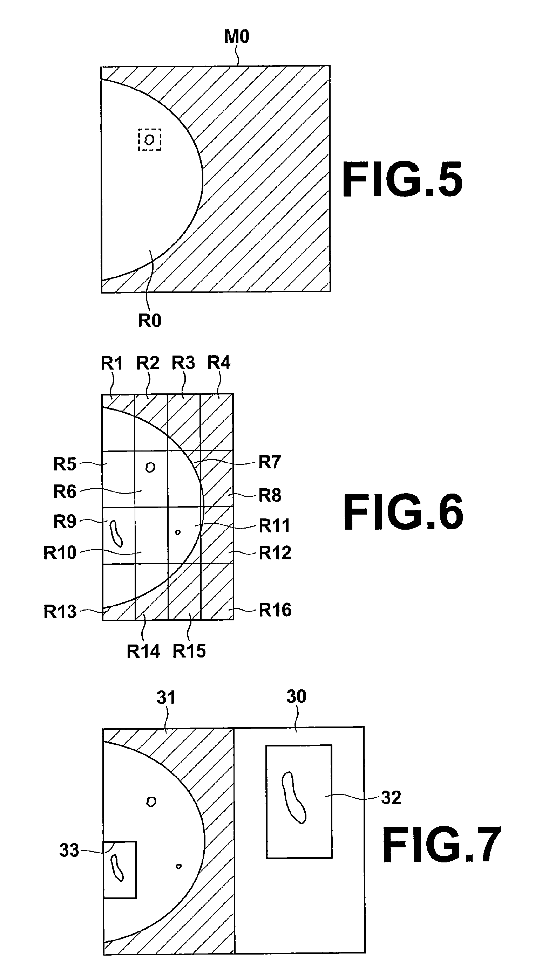

FIG. 4 is a flow chart illustrating the process that is carried out during image display. First, the processing device 21 of the image interpretation workstation 2 detects a breast area from the breast image M0 (step ST1). FIG. 5 is a diagram for explaining how the breast area is detected. As shown in FIG. 5, the breast image M0 includes an area containing the breast and a direct radiation area (indicated by the hatching) where the radiation is directly detected. The processing device 21 binarizes the breast image M0, for example, and labels an area of the breast image M0 where the pixel values exceed a predetermined threshold as the direct radiation area and the remaining area as the breast. Then, the area labeled as the breast is detected as the breast area R0.

Then, the processing device 21 divides the breast area R0 into a plurality of regions of interest having a predetermined size (step ST2) . FIG. 6 is a diagram for explaining the division into the regions of interest in the first embodiment. As shown in FIG. 6, in the first embodiment, a rectangular area containing the breast area R0 is divided into 16 (4x4) regions of interest R1 to R16. At this time, the size of the regions of interest may be determined based on the detection information D in such a manner that each abnormal shadow candidate is contained in a single region of interest, that is, in such a manner that each abnormal shadow candidate does not extend across two or more regions of interest. In the example shown in FIG. 6, the size of the regions of interest R1 to R16 is determined in such a manner that each abnormal shadow candidate does not extend across two or more regions of interest.

Then, the processing device 21 determines display order of the regions of interest R1 to R16 (step ST3). Conventionally, in the case where the image of the rectangular area containing the breast area R0 is divided into the 16 regions, as shown in FIG. 6, an enlarged image of the region of interest R1 would first be displayed when the user instructs to display the images of the regions of interest, and each of images of the regions of interest R1 to R16 are displayed in this order each time the user instructs to switch the display.

In this embodiment, first, with referencing the detection information D, a region of interest which contains the abnormal shadow candidate is selected from the regions of interest R1 to R16 based on the position of the abnormal shadow candidate. With respect to the breast area R0 shown in FIG. 6, the abnormal shadow candidates are contained in the regions of interest R6, R9 and R11, respectively, and therefore the regions of interest R6, R9 and R11 are selected. Then, the display order of the regions of interest is determined with referencing the information of degree of malignancy contained in the detection information D such that the selected regions of interest are displayed in descending order of the degree of malignancy of the abnormal shadow candidates contained in the regions of interest. If the descending order of the degree of malignancy of the abnormal shadow candidates contained in the regions of interest R6, R9 and R11 is "R9, R11, R6", the display order is determined as "R9, R11, R6". It should be noted that the display order of the regions of interest which contain no abnormal shadow candidate is determined to be the numerical order. Therefore, the display order of the regions of interest is as follows: R9, R11, R6, R1, R2, R3, R4, R5, R7, R8, R10, R12, R13, R14, R15, R16.

Then, the processing device 21 displays an interpretation screen on the display 22 (step ST4). FIG. 7 is a diagram illustrating an example of the interpretation screen. As shown in FIG. 7, the interpretation screen 30 contains an image 31 of the breast area R0 and an image 32 of one of the regions of interest. It should be noted that the image 32 of the region of interest is enlarged and displayed in a separate window on the interpretation screen 30. The image 31 of the breast area R0 is displayed, for example, without being enlarged or with being enlarged to some extent (for example, 130%). On the other hand, the image 32 of the region of interest is displayed in actual pixels. As shown in FIG. 7, in the image 31 of the breast area R0, the position of the region of interest which is currently displayed in the enlarged view is indicated by a frame 33. Thus, the user can recognize the position of the currently displayed image 32 of the region of interest in the breast area R0 from the position of the frame 33.

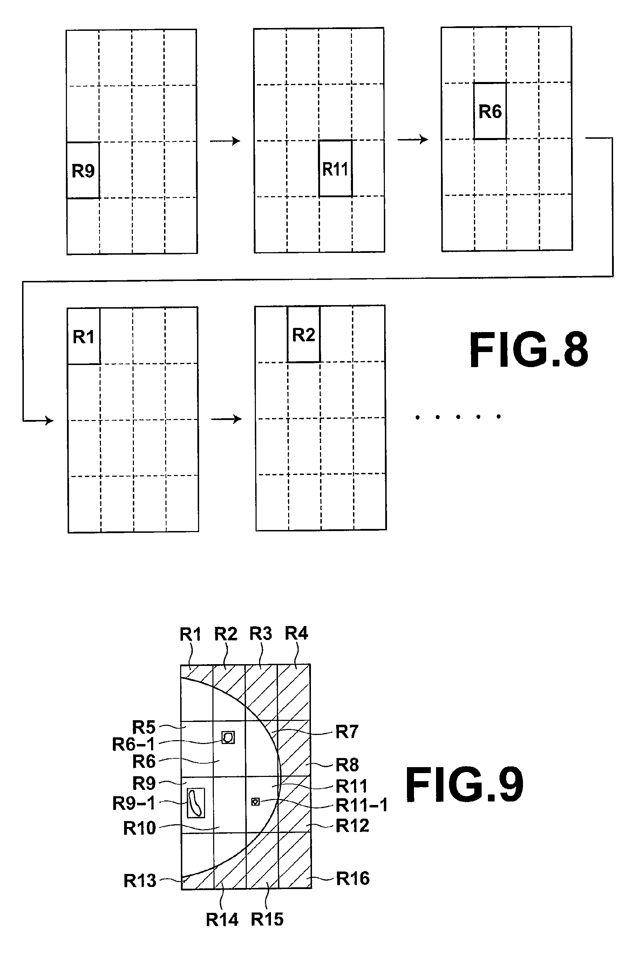

Then, the processing device 21 determines whether or not the user has instructed to switch the displayed region of interest (step ST5) . If the determination in step ST5 is affirmative, the displayed region of interest is switched into the next region of interest in the display order (step ST6). FIG. 8 is a diagram for explaining the display order of the images of the regions of interest in the first embodiment. As shown in FIG. 8, in the first embodiment, the images of the regions of interest are displayed in the display order which has been determined as described above. Namely, first, the image of the region of interest R9 is displayed. When the user instructs to switch the display, each of the images of the regions of interest R11 and R6 is displayed in this order. When the user further instructs to switch the display, the region of interest R1 is displayed. Thereafter, each of the regions of interest R2 to R16 is displayed in the numerical order in response to the user's instruction. At this time, the regions of interest R6, R9 and R11 which have already been displayed are not displayed.

If the determination in step ST5 is negative, the processing device 21 determines whether or not an instruction to end has been made (step ST7). If the determination in step ST7 is negative, the process returns to step ST5. If the determination in step ST7 is affirmative, the process ends.

As described above, in this embodiment, when the images of the regions of interest are sequentially displayed, the images of the regions of interest which contain the abnormal shadow candidates are displayed in descending order of the degree of malignancy prior to the images of the regions of interest containing no abnormal shadow candidate. Thus, the image of the region of interest containing an abnormal shadow candidate which is highly likely to be an abnormal shadow is displayed first. In this manner, the user can first perform interpretation of the image of the region of interest containing the abnormal shadow candidate which is highly likely to be an abnormal shadow, and thus can pay higher attention to interpretation of the images of such regions of interest. Thus, the user who performs interpretation is less likely to miss an abnormal shadow candidate which is highly likely to be an abnormal shadow. Further, since the user does not need to pay high attention to interpretation of the images of the regions of interest containing no abnormal shadow candidate, which are displayed later, the time taken for interpretation can be reduced. Therefore, according to this embodiment, efficient interpretation of medical images can be achieved without imposing a burden on the user.

Next, a second embodiment of the invention is described. The difference between the first and second embodiments lies only in the manner of display of the images of the regions of interest. Therefore, detailed description of the configuration of the medical information system including the image interpretation workstation 2, etc., is omitted. In the first embodiment described above, the image of the breast area R0 is divided into the regions of interest having the same size. In this case, the position of the abnormal shadow candidate in the region of interest is not clear. In the second embodiment, the regions of interest are generated in the same manner as in the first embodiment, and the range where the abnormal shadow candidate is present within each region of interest is identified with referencing the detection information D, and the range is separated as a sub-region of interest from the region of interest, and each of the images of such sub-regions of interest are displayed in the enlarged view in the order of the degree of malignancy prior to the images of the regions of interest.

FIG. 9 is a diagram illustrating the regions of interest and the sub-regions of interest in the second embodiment. As shown in FIG. 9, the abnormal shadow candidates are contained in the regions of interest R6, R9 and R11 of the image containing the breast area R0, and further, sub-regions of interest R6-1, R9-1 and R11-1, which represent the ranges where the abnormal shadow candidates are present, are contained in the regions of interest R6, R9 and R11, respectively. It should be noted that each of the sub-regions of interest R6-1, R9-1 and R11-1 may be the range where the abnormal shadow candidate is present which is determined based on the detection information D, or may be a range provided with some margin by extending the range where the abnormal shadow candidate is present by, for example, about 50% in upward, downward, rightward and leftward directions (four directions).

If the descending order of the degree of malignancy of the abnormal shadow candidates contained in the sub-regions of interest R6-1, R9-1 and R11-1 is "R9-1, R11-1, R6-1", the processing device 21 determines the display order of the sub-regions of interest as "R9-1, R11-1, R6-1". It should be noted that, after the sub-regions of interest have been displayed, the display order of the regions of interest is determined to be the numerical order. Therefore, the display order of the regions of interest and sub-regions of interest is as follows: R9-1, R11-1, R6-1, and R1 to R16.

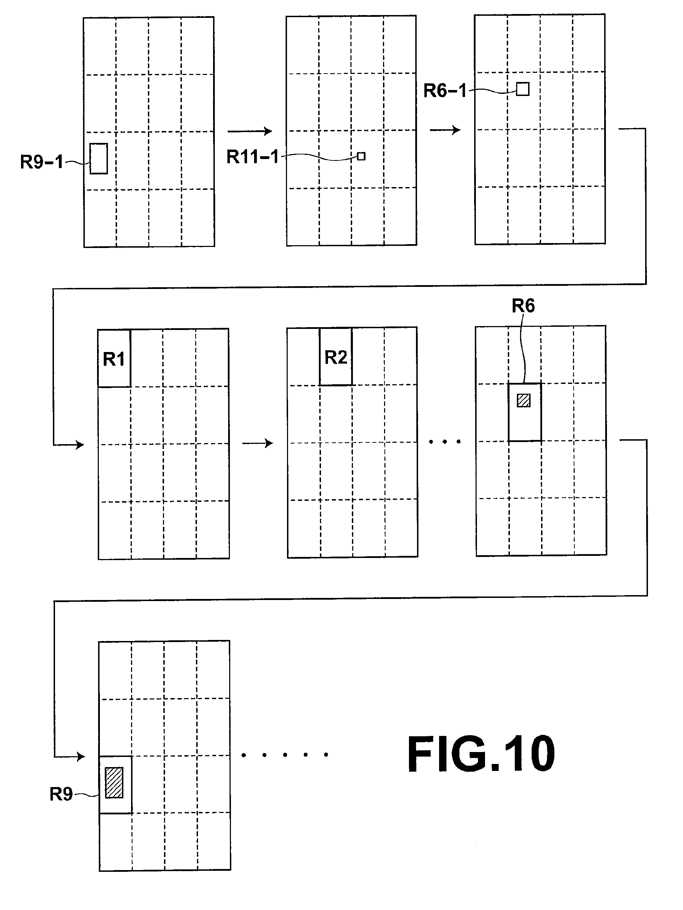

FIG. 10 is a diagram for explaining the display order of the images of the regions of interest and the sub-regions of interest in the second embodiment. As shown in FIG. 10, in the second embodiment, first, the image of the sub-regions of interest R9-1 is displayed. When the user instructs to switch the display, each of the images of the sub-regions of interest R11-1 and R6-1 is displayed in this order. When the user further instructs to switch the display, the image of the region of interest R1 is displayed. Thereafter, each of the images of the regions of interest R2 to R16 is displayed in the numerical order in response to the user's instruction. At this time, the images of the regions of interest R6, R9 and R11 containing the sub-regions of interest R6-1, R9-1 and R11-1, which have already been displayed, are displayed with changing the manner of display of the sub-regions of interest R6-1, R9-1 and R11-1 from the manner of display of areas other than the sub-regions of interest R6-1, R9-1 and R11-1. Specifically, the manner of display of the sub-regions of interest R6-1, R9-1 and R11-1 may be changed by displaying only the sub-regions of interest R6-1, R9-1 and R11-1 in black or in white, by decreasing the lightness or contrast of the sub-regions of interest R6-1, R9-1 and R11-1, or by coloring the sub-regions of interest R6-1, R9-1 and R11-1, for example. In FIG. 10, the state where the manner of display is changed is indicated by the hatching.

As described above, in the second embodiment, each of the regions of interest containing the abnormal shadow candidates is divided to separate the sub-region of interest containing the range where the abnormal shadow candidate is present, and the images of the sub-regions of interest are displayed in the descending order of the degree of malignancy of the abnormal shadow candidates contained therein prior to the images of the regions of interest. Thereafter, the images of the regions of interest are displayed in the numerical order. Thus, a range which should be interpreted with higher attention can be narrowed, thereby further reducing a burden imposed on the user who interprets the images.

Further, in this case, the regions of interest containing the abnormal shadow candidates are displayed with changing the manner of display of the sub-regions of interest, which have already been displayed, from the manner of display of the other areas. Thus, the user does not need to repeat interpretation of the sub-regions of interest contained in the regions of interest, and can perform the interpretation more efficiently.

Next, a third embodiment of the invention is described. The difference between the first and third embodiments lies only in the manner of display of the regions of interest. Therefore, detailed description of the configuration of the medical information system including the image interpretation workstation 2, etc., is omitted. In the third embodiment, with referencing the detection information D, the breast area R0 is divided into a plurality of regions of interest according to the size of each range where the abnormal shadow candidate is present, and then, each of the regions of interest containing the abnormal shadow candidate is displayed in the enlarged view in descending order of the degree of malignancy of the abnormal shadow.

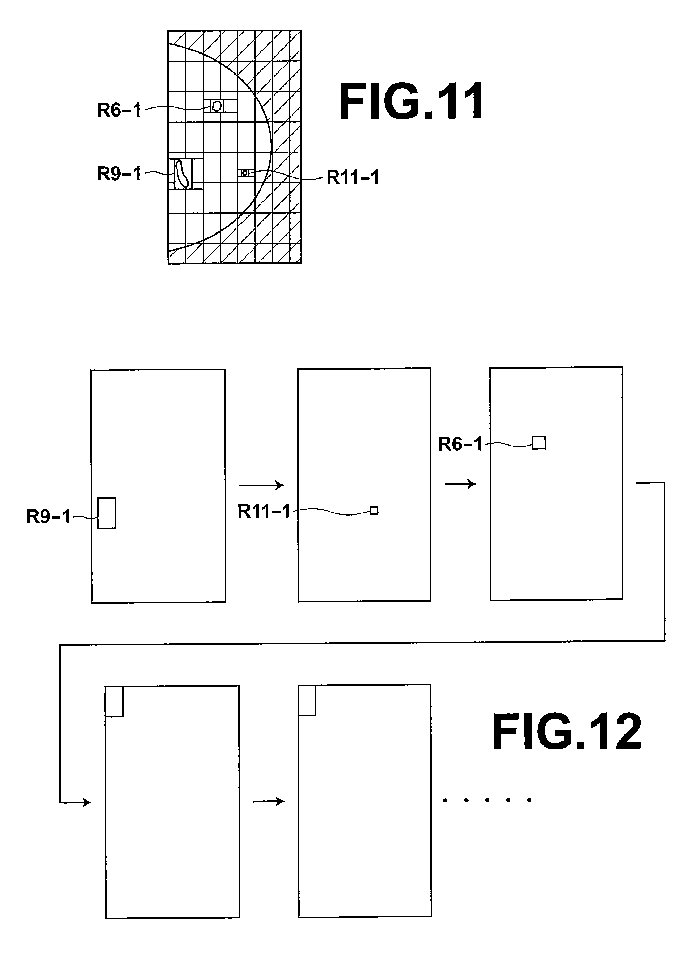

FIG. 11 is a diagram illustrating the regions of interest and the sub-regions of interest in the third embodiment. As shown in FIG. 11, the breast area R0 contains the sub-regions of interest R6-1, R9-1 and R11-1 containing the abnormal shadow candidates (the sub-regions of interest are part of the regions of interest). In the third embodiment, after the sub-regions of interest R6-1, R9-1 and R11-1 have been separated, areas other than the sub-regions of interest R6-1, R9-1 and R11-1 are divided into regions having, for example, the same size as the size of the largest sub-region of interest (these regions are also part of the regions of interest). In this case, however, areas in the vicinity of the sub-regions of interest R6-1, R9-1 and R11-1, respectively, and areas in the vicinity of the end portions of the breast area R0 may not be able to be divided into regions having the same size as the size of the largest sub-region of interest. Such areas may be divided with appropriately reducing the size of the resulting rectangles. The sizes of the sub-regions of interest R6-1, R9-1 and R11-1 may be the same as the ranges where the abnormal shadow candidates are present, which are determined based on the detection information D, or may be provided with some margin, as with the second embodiment.

Although the areas other than the sub-regions of interest R6-1, R9-1 and R11-1 are divided into the regions having the same size as the size of the largest sub-region of interest in this example, the areas other than the sub-regions of interest R6-1, R9-1 and R11-1 may be divided to have any size.

In the third embodiment, if the descending order of the degree of malignancy of the abnormal shadow candidate contained in the sub-regions of interest R6-1, R9-1 and R11-1 is "R9-1, R11-1, R6-1", the processing device 21 determines the display order of the sub-regions of interest as "R9-1, R11-1, R6-1". After the sub-regions of interest have been displayed, the display order is determined to display the remaining regions of interest in order from the upper-left corner.

FIG. 12 is a diagram for explaining the display order the images of the regions of interest and the sub-regions of interest in the third embodiment. As shown in FIG. 12, in the third embodiment, first, the image of the sub-region of interest R9-1 is displayed. When the user instructs to switch the display, each of the images of the sub-regions of interest R11-1 and R6-1 is displayed in this order. When the user further instructs to switch the display, the remaining regions of interest are displayed in order from the upper-left corner of the breast area R0.

As described above, in the third embodiment, the breast area R0 is divided into the regions of interest, each of which contains each one abnormal shadow candidate, depending on the size of each abnormal shadow candidate. Thus, a range to be interpreted in the displayed image of the region of interest can be narrowed, and thus the user can perform the interpretation more efficiently.

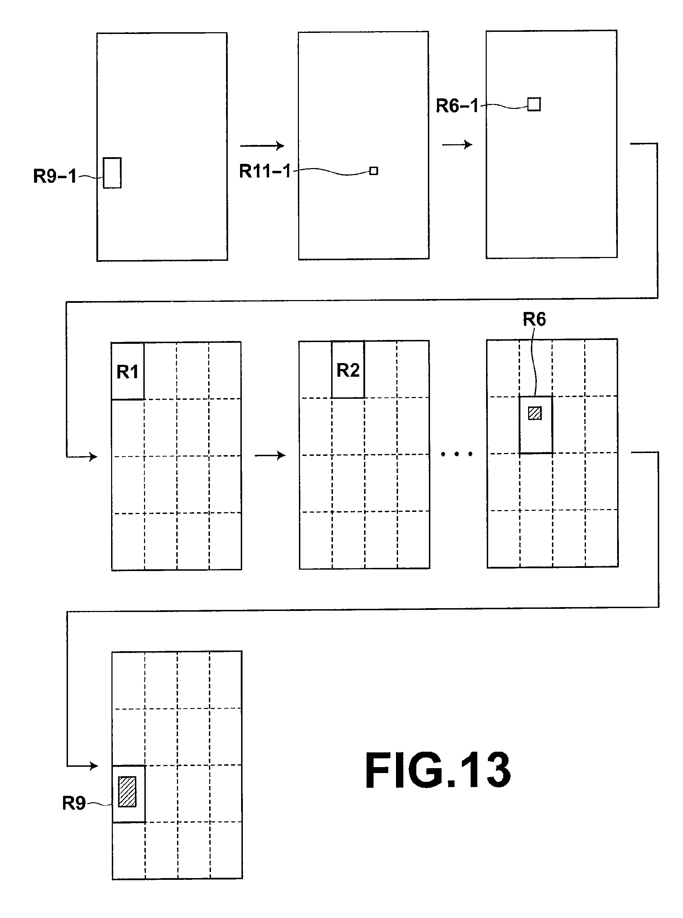

It should be noted that, in the third embodiment described above, as shown in FIG. 13, after the images of the sub-regions of interest R9-1,R11-1 and R6-1 have been displayed in this order, the regions of interest R1 to R16 having the predetermined size, as in the first embodiment, may be sequentially displayed. In this case, the images of the regions of interest R6, R9 and R11 containing the sub-regions of interest R6-1, R9-1 and R11-1, respectively, may be displayed with changing the manner of display of the sub-regions of interest R6-1, R9-1 and R11-1 from the manner of display of the areas other than the sub-regions of interest R6-1, R9-1 and R11-1 in the same manner as in the second embodiment.

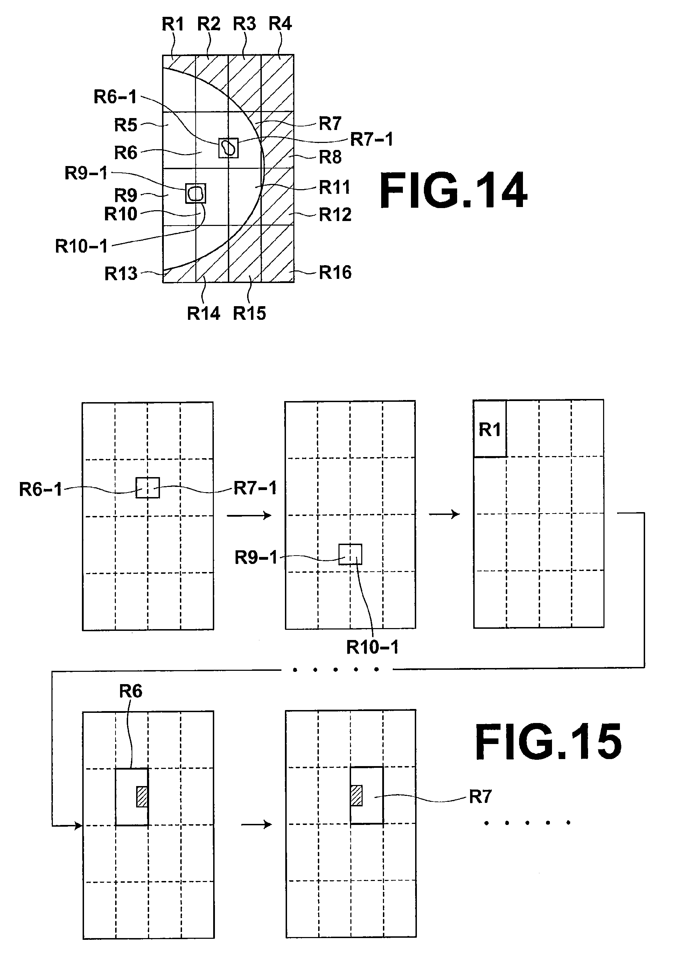

Further, in the first embodiment described above, although the size of the regions of interest is determined in such a manner that each abnormal shadow candidate does not extend across two or more regions of interest, the region of interest may have a predetermined size. In this case, each abnormal shadow candidate in the rectangular area containing the breast area R0 may extend across two or more regions of interest, such as those extending across the regions of interest R6 and R7 and the regions of interest R9 and R10, respectively, as shown in FIG. 14. Therefore, when the regions of interest are displayed in descending order of the degree of malignancy of the abnormal shadow candidates contained therein, and there is an abnormal shadow candidate extending across two or more regions of interest, the regions of interest containing that abnormal shadow candidate may be displayed in a predetermined order (for example, in the numerical order of the numbers assigned to the regions of interest) . For example, if the abnormal shadow candidates extend across the regions of interest R6 and R7 and the regions of interest R9 and R10, respectively, as shown in FIG. 14, and the abnormal shadow candidate extending across the regions of interest R6 and R7 has a higher degree of malignancy, the images of the regions of interest R6, R7, R9 and R10 may be displayed in this order. Thereafter, the region of interest R1 may be displayed, and the regions of interest R2 to R16 other than the already displayed regions of interest R6, R7, R9 and R10 may be displayed in the numerical order.

Next, a case where the abnormal shadow candidate extend across two or more regions of interest, and the regions of interest and the sub-regions of interest are displayed in the manner as described in the second embodiment is described. FIG. 15 is a diagram for explaining the display order of the images of the regions of interest and the sub-regions of interest in the second embodiment in the case where the abnormal shadow candidate extend across two or more regions of interest. In this example, the regions of interest R6, R7, R9 and R10 contain sub-regions of interest R6-1, R7-1, R9-1 and R10-1, respectively. As shown in FIG. 15, first, the sub-region of interest R6-1 and the sub-region of interest R7-1 are displayed as a single image. Further, when the user instructs to switch the display, the sub-region of interest R9-1 and the sub-region of interest R10-1 are displayed as a single image. When the user further instructs to switch the display, the image of the region of interest R1 is displayed. Thereafter, the images of the regions of interest R2 to R16 are displayed in the numerical order in response to the user's instruction. At this time, the images of the regions of interest R6 , R7, R9 and R10 containing the images of the sub-regions of interest R6-1, R7-1, R9-1 and R10-1, which have already been displayed, are displayed with changing the manner of display of the sub-regions of interest R6-1, R7-1, R9-1 and R10-1 from the manner of display of areas other than the sub-regions of interest R6-1, R7-1, R9-1 and R10-1. In FIG. 15, the state where the manner of display is changed is indicated by the hatching.

In the first to third embodiments described above, the medical information system includes the modality 1, the image interpretation workstation 2, the image server, the image database 4 and the CAD system 5. However, the medical information system may only include the modality 1 and the image interpretation workstation 2. In this case, a software program to carry out the detection of the abnormal shadow candidate may be installed on the modality 1 or the image interpretation workstation 2 to carry out the detection of the abnormal shadow candidate at the modality 1 or the image interpretation workstation 2.

Further, although the abnormal shadow candidate is detected by the CAD system 5 in the first to third embodiments described above, a software program to carry out the detection of the abnormal shadow candidate may be installed on the modality 1 or the image interpretation workstation 2 to carry out the detection of the abnormal shadow candidate at the modality 1 or the image interpretation workstation 2.

Still further, although the detection information D of the abnormal shadow candidate is sent to the image server 3 and the detection information D is stored on the image database 4 together with the image data in the first to third embodiments described above, the image data and the detection information D may directly be sent from the CAD system 5 to the image interpretation workstation 2, and display of the image may be carried out at the image interpretation workstation 2.

Yet further, although the breast area R0 is detected from the breast image M0 and the image of the breast area R0 is divided into a plurality of regions of interest in the first to third embodiments described above, the detection of the breast area R0 may be omitted and the entire breast image M0 may be divided into a plurality of regions of interest. In this case, the regions of interest which only contain the direct radiation areas may be detected and display of the detected regions of interest may be omitted.

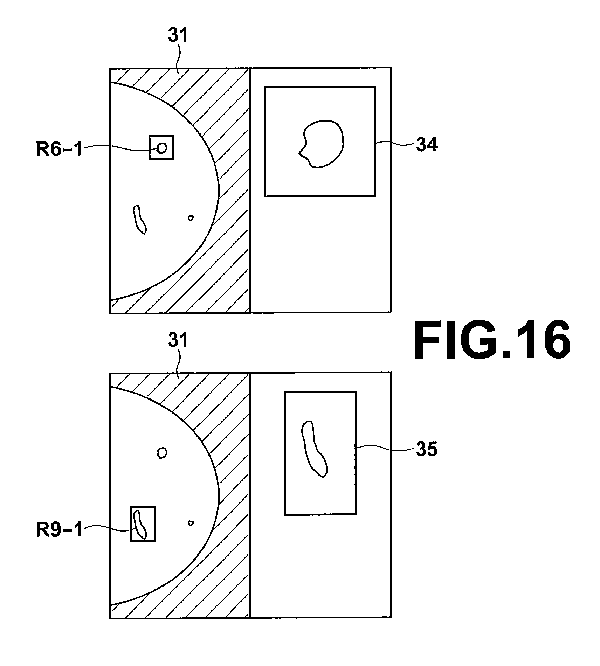

Further, in the first to third embodiments described above, the enlargement factor of the image of the region of interest or the sub-region of interest may be varied depending on the size of the abnormal shadow candidate. In this case, a larger enlargement factor may be applied to an image of a region of interest or a sub-regions of interest containing a relatively small abnormal shadow candidate, and a smaller enlargement factor may be applied or no enlargement may be applied to an image of a region of interest or a sub-regions of interest containing a relatively large abnormal shadow candidate. For example, when the image of the sub-region of interest R6-1 and the image of the sub-region of interest R9-1 shown in FIG. 9 are displayed, the enlargement factor applied to the image 34 of the sub-region of interest R6-1 may be larger than the enlargement factor applied to the image 35 of the sub-region of interest R9-1, as shown on the interpretation screen in FIG. 16.

It should be noted that, if the same part of the same patient has been imaged for several times over time, or there are enlarged images of the same part, several pieces of image data of the same patient may be registered on the image database 4. In this case, the display order of the images may be determined using, for example, the technique disclosed in Patent Document 3 to sequentially display the images, and the display processing according to any of the first to third embodiments may be applied to each displayed image.

The present invention is not limited to the first to third embodiments described above, and encompasses any combinations of the first to third embodiments and those easily conceivable from the first to third embodiments.

## Claims

1. An image display device comprising:
acquiring means (21) for acquiring a medical image of a subject and detection information including positions of abnormal shadow candidates and degrees of malignancy of abnormal shadows detected from the medical image; and
display control means (21) for dividing the medical image into a plurality of regions of interest, and sequentially displaying images of the regions of interest on display means (22) with displaying images of the regions of interest containing the abnormal shadow candidates in descending order of the degree of malignancy based on the detection information prior to images of the regions of interest containing no abnormal shadow candidate.

2. The image display device as claimed in claim 1, wherein the display control means (21) divides the medical image into the regions of interest having a predetermined size.

3. The image display device as claimed in claim 2, wherein the display control means (21) determines the predetermined size in such a manner that each abnormal shadow candidate is contained in a single region of interest.

4. The image display device as claimed in any one of claims 1 to 3, wherein the display control means (21) further divides each region of interest containing the abnormal shadow candidate to separate a sub-region of interest only containing the abnormal shadow candidate therefrom, first displays images of the sub-regions of interest on the display means (22) in descending order of the degree of malignancy of the abnormal shadow candidates contained in the sub-region of interest, and then displays the images of the regions of interest on the display means (22) in a predetermined order.

5. The image display device as claimed in claim 4, wherein the display control means (21) displays each region of interest containing the sub-region of interest with changing a manner of display of the sub-region of interest in the region of interest from a manner of display of areas other than the sub-region of interest in the region of interest.

6. The image display device as claimed in claim 4 or 5, wherein, when the image of each sub-region of interest and the medical image are simultaneously displayed, the display control means (21) provides the medical image with information for identifying a position of the sub-region of interest in the medical image.

7. The image display device as claimed in any one of claims 4 to 6, wherein the display control means (21) displays the image of each sub-region of interest with enlarging the sub-region of interest by an enlargement factor depending on a size of the abnormal shadow candidate contained in the sub-region of interest.

8. The image display device as claimed in claim 1, wherein the display control means (21) divides the medical image into a plurality of regions of interest depending on a size of each abnormal shadow candidate, each region of interest containing each one abnormal shadow candidate.

9. The image display device as claimed in any one of claims 1 to 8, wherein, when the image of each region of interest and the medical image are simultaneously displayed, the display control means (21) provides the medical image with information for identifying a position of the region of interest in the medical image.

10. The image display device as claimed in any one of claims 1 to 9, wherein the display control means (21) displays the image of each region of interest with enlarging the region of interest by an enlargement factor depending on a size of the abnormal shadow candidate contained in the region of interest.

11. The image display device as claimed in any one of claims 1 to 10, wherein the display control means (21) divides only an area containing the subject in the medical image into the regions of interest to display the regions of interest.

12. An image display method comprising:
acquiring a medical image of a subject and detection information including positions of abnormal shadow candidates and degrees of malignancy of abnormal shadows detected from the medical image; and
dividing the medical image into a plurality of regions of interest, and sequentially displaying images of the regions of interest on display means with displaying images of the regions of interest containing the abnormal shadow candidates in descending order of the degree of malignancy based on the detection information prior to images of the regions of interest containing no abnormal shadow candidate.

13. A program for causing a computer to carry out an image display method, the image display method comprising:
acquiring a medical image of a subject and detection information including positions of abnormal shadow candidates and degrees of malignancy of abnormal shadows detected from the medical image; and
dividing the medical image into a plurality of regions of interest, and sequentially displaying images of the regions of interest on display means with displaying images of the regions of interest containing the abnormal shadow candidates in descending order of the degree of malignancy based on the detection information prior to images of the regions of interest containing no abnormal shadow candidate.
